# EUROPÄISCHE PATENTANMELDUNG

(11) **EP 1 842 619 A2**
(43) Veröffentlichungstag der Anmeldung: **10.10.2007**
(21) Anmeldenummer: 07007295.4
(22) Anmeldetag: 10.04.2007
(51) Int. Cl.: B23K 35/28, C22C 21/02

(54) **Al-Si-Lotlegierungen und Ihre Verwendung für das Hartlöten von Aluminium und Aluminium/Stahl-Fügungen**

(30) Priorität: 08.04.2006 DE 102006016643
(71) Anmelder: Umicore AG & Co. KG, 63457 Hanau-Wolfgang (DE)
(72) Erfinder: Stroiczek, Martin, 63486 Bruchkoebel (DE); Schmoor, Hartmut, 63739 Aschaffenburg (DE)

(57) **Zusammenfassung**

Aluminiumlote werden zum Fügen von unterschiedlichen Aluminiumlegierungen und Mischverbunden, wie zum Beispiel Aluminium mit Stahl, benötigt. Eine entscheidende Bedeutung kommt hierbei der Absenkung der Schmelzbereiche der Lotsysteme im Vergleich zum Standardlot AlSi12 zu. Hierbei sind neben der Festigkeit der Fügeverbindung auch die Korrosionsfestigkeit und Benetzungsfähigkeit wichtige Kriterien für die Einsatzfähigkeit.

Wie sich gezeigt hat, konnten durch geeignete Legierungszusätze die Schmelzbereiche abgesenkt werden. Bei guter Benetzungsfähigkeit und Korrosionsfestigkeit wurden ebenfalls hohe Verbindungsfestigkeiten erzielt. Die neuen Lotlegierungen erweitern Lötanwendungen auf Aluminiumlegierungen mit Solidustemperaturen unter 600 °C und ermöglichen damit neue Mischverbunde.

## Beschreibung

Die Erfindung Al-Si-Lotlegierungen und ihre Verwendung zum Hartlöten von Aluminium und von Fügungen zwischen metallischen Werkstoffen wie zum Beispiel Aluminium und Stahl, Kupferlegierungen oder Nickellegierungen mit niedriger Hartlöttemperatur und geringer Neigung zur Sprödphasenbildung bei kritischen Fügepartnern wie niedriglegierten Stählen.

Das Fügen von hochlegierten Aluminium-Werkstoffen durch Löten ist derzeit durch einen Mangel an geeigneten Lotwerkstoffen gekennzeichnet. Notwendig sind Lotwerkstoffe, die deutlich unterhalb der Solidustemperatur des Grundwerkstoffs aufschmelzen. Als einzig für die Massenanwendung wie z.B. das Löten von Kühlem für PKWs qualifizierte Lote haben sich Zweistofflegierungen der Al-Si-Familie mit Si-Gehalten von 7 bis 12 % durchgesetzt. Mit einer Löttemperatur von 580 bis 610°C stellen sie hohe Anforderungen an die Temperaturführung im Lötprozeß. Je nach verwendeter lötbarer Aluminiumlegierung liegt zwischen der Löttemperatur und dem Anschmelzen der Fügebauteile nur eine Temperaturdifferenz von 20 bis 70 °C. Bevorzugt wird wegen ihrer hohen Festigkeit und Korrosionsbeständigkeit die Legierung A1Si12 für solche Fügungen verwendet. Die hohe Löttemperatur nahe der Solidustemperatur der zu verlötenden Aluminiumlegierungen kann allerdings zu einem Verlust der Festigkeit dieser Legierungen führen.

Die für viele Anwendungen besonders interessanten, hochfesten Aluminiumlegierungen sowie sämtliche Aluminiumlegierungen mit Solidustemperaturen unter 600 °C sind dagegen mit den derzeit zur Verfügung stehenden Lotwerkstoffen nicht hartlötbar.

Mit Al-Si-Hartloten lassen sich im allgemeinen hochfeste Edelstahl/Aluminium-Verbindungen durch Hartlöten realisieren. Das Verbinden niedriglegierter Karosseriebleche mit Aluminiumlegierungen im Automobilbau mittels Plasma- oder Laserlötverfahren führt jedoch bei den Al-Si-Hartloten zur Bildung von FeAI-Sprödphasen.

Zur Absenkung der Löttemperatur werden teilweise auch Zn-Basislegierungen mit im Weichlötbereich liegenden Schmelzbereichen von 400 bis 450 °C eingesetzt. Die mit diesen Legierungen einhergehenden Nachteile der Sprödigkeit, Korrosionsanfälligkeit und geringeren Festigkeit beschränken deren Einsatz auf unkritische Fügeverbindungen.

Aufgabe der vorliegenden Erfindung war es daher, ausgehend von den bekannten Al-Si-Hartloten durch Zusatz weiterer Legierungskomponenten die Löttemperatur in den Bereich zwischen 500 und 580 °C abzusenken, ohne dabei die guten Eigenschaften des Lotes AlSi12 bezüglich Korrosionsbeständigkeit und Festigkeit zu opfern.

Gelöst wird diese Aufgabe durch eine Al-Si-Lotlegierung mit einer Schmelztemperatur zwischen 500 und 580 °C, die aus Aluminium, 4 bis 12 Gew.-% Silizium und neben herstellungsbedingten Verunreinigungen von maximal 0,1 Gew.-% noch aus wenigstens zwei weiteren Legierungskomponenten besteht, die ausgewählt sind aus

| | |
|---|---|
| 0,5 bis | 32 Gew.-% Kupfer, |
| 0,5 bis | 8 Gew.-% Zinn, |
| 0,2 bis | 2 Gew.-% Magnesium, |
| 0,2 bis | 8 Gew.-% Silber, |

wobei sich alle Legierungskomponenten zu 100 % addieren. Die in der Legierung enthaltenen Verunreinigungselemente, zum Beispiel Eisen und Mangan, sollten jeweils 0,05 Gew.-%, nicht übersteigen.

In einer besonderen Ausführungsform der Erfindung sind die weiteren Legierungskomponenten ausgewählt aus

| | |
|---|---|
| 23 bis | 32 Gew.-% Kupfer und |
| 0,1 bis | 8 Gew.-% Silber. |

In einer anderen 4-Stofflegierung gemäß der Erfindung sind die weiteren Legierungskomponenten ausgewählt aus

| | |
|---|---|
| 0,5 bis | 8 Gew.-% Kupfer und |
| 0,1 bis | 8 Gew.-% Silber. |

In einer weiteren Lotlegierung gemäß der Erfindung sind die weiteren Legierungskomponenten ausgewählt aus

| | |
|---|---|
| 0,5 bis | 8 Gew.-% Kupfer und |
| 0,2 bis | 8 Gew.-% Zinn und |
| 0,2 bis | 2 Gew.-% Magnesium. |

Geeignet sind auch Lotlegierungen, bei denen die weiteren Legierungskomponenten Zinn und Magnesium mit den folgenden Konzentrationen sind

| | |
|---|---|
| 0,5 bis | 8 Gew.-% Zinn und |
| 0,1 bis | 2 Gew.-% Magnesium. |

Besonders geeignet für die Verwendung zum Hartlöten von Aluminium und Aluminium/Stahl-Fügungen haben sich Al-Si-Lotlegierungen erwiesen, die aus Aluminium, 4 bis 12 Gew.-% Silizium und neben herstellungsbedingten Verunreinigungen von maximal 0,1 Gew.-% noch aus folgenden Legierungs-Komponenten bestehen

| | |
|---|---|
| 0,5 bis | 8 Gew.-% Kupfer und |
| 1 bis | 8 Gew.-% Silber. |

Es hat sich gezeigt, daß der erhöhte Silbergehalt dieser Legierungen die Schmelztemperatur weiter vermindert und die Benetzung der Fügepartner verbessert.

Eine weitere Gruppe von Al-Si-Lotlegierungen, die sehr gut für die Verwendung zum Hartlöten von Aluminium und Aluminium/Stahl-Fügungen geeignet sind, haben sich Al-Si-Lotlegierungen erwiesen, die aus Aluminium, 4 bis 12 Gew.-% Silizium und neben herstellungsbedingten Verunreinigungen von maximal 0,1 Gew.-% noch aus folgenden Legierungs-Komponenten bestehen

| | |
|---|---|
| 2 bis | 8 Gew.-% Kupfer, |
| 0,2 bis | 3 Gew.-% Zinn, |
| 0,2 bis | 2 Gew.-% Magnesium. |

Bei allen vorgestellten Lotlegierungen ergänzt Aluminium die Zusammensetzung zu 100%.

Die Liquidustemperaturen der erfindungsgemäßen Legierungen liegen im Bereich von 517 bis 575°C. Durch diese relativ geringe Löttemperatur werden die Fügewerkstoffe beim Verlöten kaum geschädigt und die Zahl lötbarer Aluminiumlegierungen vergrößert sich. Aluminiumlegierungen, wie zum Beispiel AA6082 (AlSilMgMn), die sich mit dem konventionellen Lot AlSi12 wegen der hohen Löttemperatur von 590 °C nicht verlöten lassen, können dagegen mit den erfindungsgemäßen Loten ohne Anschmelzungen mittels Flammlöten verbunden werden.

Die erfindungsgemäßen Legierungen können mit Hilfe verschiedener Erwärmungsmethoden verarbeitet werden, wie zum Beispiel Plasmalöten, Laserlöten, Flammlöten, Induktionslöten und Ofenlöten. Bei Verwendung handelsüblicher Hartlötflußmittel FL10 und FL 20 nach EN 1045 ergeben sie sehr gute Lötverbindungen. Die geringeren Löttemperaturen führen zu einer höheren Prozeßsicherheit bei Anwendung dieser Erwärmungsmethoden.

Die Erfindung wird an Hand des folgenden Beispiels näher erläutert.

### Beispiel:

Für Zugproben wurden Karosseriebleche aus der Aluminiumlegierung AA6016 (A1SiMg) mit der erfindungsgemäßen Legierung AlSi10Cul,3Ag3,7 mittels Plasma-Lötverfahren ohne Zusatz von Flußmittel gelötet.

Die Lotverbindungen wiesen eine maximale Zugfestigkeit von (Rm) 150 MPa auf und zeigten ein sehr gutes Benetzungsverhalten mit geringer Porosität. Die Lotnähte wiesen eine glatte Oberfläche auf, so daß Nacharbeiten zur Glättung der Lotnähte nicht notwendig waren.

An den Lotverbindungen wurden außerdem Korrosionsuntersuchungen vorgenommen. Hierzu wurden die Lotverbindungen einem Wechseltauchversuch nach ASTM G44 in 3,5%-iger Kochsalzlösung für die Dauer von 500 Stunden ausgesetzt. Die erfindungsgemäße Legierung AlSi10Cu1,3Ag3,7 ergab Korrosionstiefen von 130 bis 195 µm im Vergleich zu 80 bis 210 µm im Grundwerkstoff.

## Patentansprüche

1. Verwendung einer Al-Si-Lotlegierung mit einer Schmelztemperatur zwischen 500 und 580 °C für das Hartlöten von Aluminium und Aluminium/Stahl-Fügungen,
**dadurch gekennzeichnet,**
**daß** sie aus Aluminium, 4 bis 12 Gew.-% Silizium und neben herstellungsbedingten Verunreinigungen von maximal 0,1 Gew.-% noch aus folgende Komponenten besteht
| | |
|---|---|
| 0,5 bis | 8 Gew.-% Kupfer und |
| 1 bis | 8 Gew.-% Silber. |

2. Verwendung einer Al-Si-Lotlegierung mit einer Schmelztemperatur zwischen 500 und 580 °C für das Hartlöten von Aluminium und Aluminium/Stahl-Fügungen,
**dadurch gekennzeichnet,**
**daß** sie aus Aluminium, 4 bis 12 Gew.-% Silizium und neben herstellungsbedingten Verunreinigungen von maximal 0,1 Gew.-% noch aus folgende Komponenten besteht
| | |
|---|---|
| 2 bis | 8 Gew.-% Kupfer, |
| 0,2 bis | 3 Gew.-% Zinn, |
| 0,2 bis | 2 Gew.-% Magnesium. |
